# EUROPEAN PATENT APPLICATION

(11) **EP 0 945 718 A1**
(43) Date of publication of application: **29.09.1999**
(21) Application number: 98105160.0
(22) Date of filing: 21.03.1998
(51) Int. Cl.: G01J 3/457

(54) **A method for characterizing samples by determination of a function of at least one specific property of units of said sample**

(71) Applicant: Evotec BioSystems AG, 22525 Hamburg (DE)
(72) Inventor: Palo, Kaupo, 0001 Tallinn (EE)
(74) Representative: Meyers, Hans-Wilhelm, Dr.Dipl.-Chem.

(57) **Abstract**

A method for characterizing samples having units, by monitoring fluctuating intensities of radiation emitted, scattered and/or reflected by said units in at least one measurement volume, the monitoring being performed by at least one detection means, said method comprising the steps of:
a) measuring in a repetitive mode a length of time intervals between photon counts,
b) determining a function of the length of said time intervals,
c) determining a function of at least one specific physical property of said units on basis of said function of the length of time intervals.

## Description

The present invention relates to a method for characterizing samples by determination of a function of at least one specific physical property of units of said sample.

The essence of a number of pharmacological, biological and chemical problems is to detect substances in a sample or to measure the interaction or reaction of these substances. In order to measure the substances in a sample more specifically, usually at least one of the reactants is radioactively or luminescently labelled. A convenient and sensitive type of labels are fluorescent labels.

Widely used methods to monitor interactions by fluorescence are the determination of changes in overall fluorescence intensity or in anisotropy of fluorescence. However, a number of side effects, such as surface binding or fluorescence from impurities, often lead to interpretation problems and artifacts. A second reason which has induced interest towards refined methods of analysis is the need to work with small amounts of a large number of samples in the field of high throughput screening and large capacity diagnostics.

New opportunities for assay development were opened when the technology for monitoring fluorescence from single fluorophore molecules became available. The first successful studies on fluorescence intensity fluctuations were performed by Magde, Elson and Webb (Biopolymers, Vol. 13, 29-61, 1974) who demonstrated the possibility to detect number fluctuations of fluorescent molecules and established a research field called fluorescence correlation spectroscopy (FCS). FCS was primarily developed as a method for determining chemical kinetic constants and diffusion coefficients. The experiment consists essentially in measuring the variation of the number of molecules of specific reactants in time in a defined open volume of solution. Microscopic fluctuations of the concentration of the reactant are detected as fluorescence intensity fluctuations from a small, open measurement volume. The measurement volume is defined by a focussed laser beam, which excites the fluorescence, and a pinhole in the image plane of the microscope collecting fluorescence. Intensity of fluorescence emission fluctuates in proportion with the changes in the number of fluorescent molecules as they diffuse into and out of the measurement volume and as they are created or eliminated by the chemical reactions. Technically, the direct outcome of an FCS experiment is the calculated autocorrelation function of the measured fluorescence intensity.

An important application of FCS is to determine concentrations of fluorescent species having different diffusion rates in a mixture. In order to separate the two terms corresponding to translation diffusion of two kinds of particles in the autocorrelation function of the fluorescence intensity, at least about a two-fold difference in diffusion time is needed, which corresponds generally to an eight-fold difference in the mass of the particles. Furthermore, if one succeeds in separating the two terms in the autocorrelation function of fluorescence intensity, it is yet not sufficient for determining the corresponding concentrations except if one knows the relative brightness of the two different types of particles.

Possible biophysical applications further demand the ability to analyze complex mixtures of different species. For that purpose, Palmer and Thompson studied higher order correlation functions of fluorescence intensity fluctuations and have outlined methods for determining the number densities and relative molecular brightness of fluorescence of different fluorescent species (Biophys J., Vol. 52, 257-270, August 1987). Their technique may in principle proof useful in detecting and characterizing aggregates of fluorescently labelled biological molecules such as cell surface receptors, but has a major disadvantage of being rather complex, so that data processing of an experiment including the calculation of high-order correlation functions last hours.

A considerably less complicated method than calculation of high order auto-correlation functions for characterizing mixtures of fluorescent species of different specific brightness is calculation of higher order moments of fluorescence intensity out of the experimentally determined distribution of the number of photon counts. This method was presented by Qian and Elson (Biophys. J., Vol. 57, 375-380, February 1990; Proc. Natl. Acad. Sci. USA, Vol. 87, 5479-5483, July 1990). The method of moments is hardly suitable for characterizing complex samples or selecting between competing models of the sample or checking whether the given model is appropriate

Further improvements were made within the European patent application 96 116 373.0. This application describes a method for analyzing samples by measuring numbers of photon counts per defined time interval in a repetitive mode from light emitted, scattered and/or reflected by particles in said sample, and determining the distribution of the number of photon counts per said time intervals, characterized in that the distribution of specific brightness of said particles is determined from said distribution of the number of photon counts. This method can also be applied to study fluorescent samples. This special embodiment is the so called fluorescence intensity distribution analysis (FIDA). While FCS distinguishes between different species according to their diffusion time, FIDA distinguishes between them according to their specific brightness.

Kask et al. describe possibilities for the use of fluorescence correlation spectroscopy in the nanosecond time range (Eur. Biophys. J., 12: 163-166, 1985). However, there is no discussion on determining a distribution of a specific physical property from the measured photon interval distribution function in their report.

An object of the invention is to provide a reliable and fast method for characterizing samples.

The object of the present invention is solved with the method having the features of claim 1.

It is to be understood that the following description is intended to be illustrative and not restrictive. Many embodiments will be apparent to those of skill in the art upon reviewing the following description. By way of example, the invention will be described primarily with reference to monitoring numbers of photon counts from light emitted by fluorescently labelled particles in a sample. This is because fluorescence is a very sensitive means allowing to monitor single molecules, and still rather selective allowing to distinguish between different species. However, in some embodiments it may be desirable to monitor numbers of photon counts of other origin than fluorescence.

The term "unit of a sample" refers, in general, to subparts of the sample which are capable of emitting, scattering and/or reflecting radiation. A sample might contain a number of identical units or different units which preferably can be grouped into species on basis of at least one of their specific physical properties. The term "different species" refers also to different states, in particular different conformational states, of a unit such as a molecule. Fluorescently labelled or naturally fluorescent molecules, molecular complexes, vesicles, cells, beads and other particles in water or other liquids are examples of fluorescent units in liquid samples, while examples of fluorescent units of a solid sample are impurity molecules, atoms or ions, or other fluorescence centers.

What is meant by the term "specific physical property" is generally a measurable physical property having a certain value or interval of values for one species and, in general, another value or interval of values for another species if said species have been characterized on basis of said specific physical property. Examples of specific physical properties are: diffusion coefficient, absorption cross-section, quantum yield of fluorescence, specific brightness, anisotropy of fluorescence, fluorescence decay time, ratio of fluorescence intensity passing through different optical filters, etc.

The specific brightness in the sense of the present invention is a physical characteristic which expresses in what extent a unit of given species is able to emit, scatter and/or reflect radiation. It is thought to characterize single units and therefore the value of specific brightness is neither depending on concentration of the units, nor on the presence of other, units. Thus, a change of the total count rate of photons emitted, scattered and/or reflected from the measurement volume, if only due to a change in concentration of the total number of units, does not influence the value of specific brightness. Specific brightness of a unit is usually expressed in terms of the mean count rate per unit which is a weighted average of the count rate over coordinates of the unit in the measurement volume.

According to the invention, a very rapid and reliable characterization of samples having units which emit, scatter and/or reflect radiation is possible. In the first step, the length of time intervals between photon counts is measured in a repetitive mode. In a second step, a function of the length of said time intervals is determined. In a third step, a function of at least one specific physical property of said units is determined on basis of said function of the length of time intervals.

In a preferred embodiment, the length of time intervals between consecutive photon counts is measured in a repetitive mode.

In a further preferred embodiment, said function of at least one specific physical property of said units and/or said function of the length of said time intervals is a distribution function.

It might be preferred to monitor the fluctuating intensities of radiation emitted, scattered and/or reflected by said units in at least one measurement volume with the help of only one detection means. If one is interested in characterization of species according to more than one specific physical property, for example, to different polarizations or spectral sensitivities of fluorescence detection, then it might be preferred to use more than one detection means. In a further embodiment, a plurality of assays might be performed simultaneously, requiring a parallelization of detection means. Any detector which is capable to detect radiation emitted, scattered and/or reflected by units of the sample may be used. Appropriate detection means such as an avalanche photo-diode, a photomultiplier or conventional photodiodes are well known to those of skill in the art. It might also be preferred to use a multidetector consisting or a monolithic configuration of a plurality of detectors, especially if one wants to measure a set of samples in parallel as it is the case in miniaturized high throughput screening. It might further be preferred to use a two-dimensional multiarray detector.

According to a preferred embodiment, the units are particles, molecules, aggregates, vesicles, cells, viruses, bacteria, centers, or mixtures thereof in solids, liquids or gases. It might be preferred to group units into species which can be distinguished by at least one of their specific physical properties. At least one of the species can be luminescent, preferably fluorescent, and/or can be luminescently labelled.

In one preferred embodiment, the specific physical property characterizing said units is the specific brightness.

It might further be preferred to characterize fluorescent units by the polarization ratio of their fluorescence, or fluorescence anisotropy, or any other property expressing the extent of polarization of fluorescence.

In one embodiment, the specific physical property characterizing the fluorescent units is the ratio of fluorescence intensities corresponding to different excitation wavelengths and/or different spectral sensitivities of fluorescence detection, or any other property expressing the dependence of fluorescence intensity on the wavelength of excitation and/or detection.

In a further preferred embodiment, the specific physical property characterizing said fluorescent units is lifetime of fluorescence.

It might further be preferred to characterize said units by their diffusion coefficient, or correlation time of radiation intensity fluctuations, or any other property directly related to said diffusion coefficient.

The specific physical properties, in particular luminescence properties like fluorescence lifetime or fluorescence anisotropy, of the units can be varied by conjugating them with a specific luminophore via different linker molecules. It might be preferred to use polymeric linker molecules consisting of a varying number of equal or different monomers.

The luminescence properties of the units may also be varied by conjugating them with a first molecule, as e.g. biotin, which binds a luminescently labelled second molecule, as e.g. luminescently labelled avidin or streptavidin.

The luminescence properties of a particle can also be changed by energy transfer. Energy absorbed by a donor is transferred upon close contact to a luminophor of an acceptor and subsequently emitted

In a preferred embodiment, the measurement volume is only a part of the total volume of the sample and said units are diffusing and/or being actively transported into and out of said measurement volume and/or said sample is actively transported and/or optically scanned. If said units, e.g. fluorescent particles, are sufficiently small, then diffusion is fast enough for data acquisition from a great number of counting intervals. However, if the characteristic time of diffusion is substantially longer than the time interval for measuring fluorescence intensity, then active transport (flow or scanning) can considerably save time of data acquisition.

The method according to the present invention is particularly well suited for high throughput screening, diagnostic purposes, monitoring polymerization, aggregation or degradation processes, or for general analytical purposes, such as environmental analytics or process control.

In screening procedures; substances that are possibly pharmacologically active can be analyzed through their interaction with specific receptors by examining said interaction with binding of a luminescently labelled ligand to receptors wherein natural receptors on their carrier cells as well as receptors on receptor-overexpressing carrier cells or receptors on vesicles or receptors in the form of expressed molecules or molecular complexes may be used. Moreover, the interaction of substances with enzymes in solution or in their genuine cellular environment can be detected by monitoring a change of the substrate of the enzyme, e.g. a change in size, brightness, rotational diffusion, or any other of the above mentioned fluorescence properties. Another means of determining enzyme activity is to add a fluorescently labelled molecule, which binds to either educt or product of the enzymatic reaction. Another method for investigating pharmacological activity of substances is the measurement of reporter systems such as Green Fluorescent Protein (GFP) expresssion, and of the properties of molecules to which GFP is attached. Further applications, especially concerning the performance of assays, are disclosed in WO 94/16313.

For the detection of specific recognition reactions, potential active substances can be present in complex natural, synthetic or semisynthetic mixtures which are subjected to separation prior to analysis. These mixtures can be separated first e.g. by chromatography to test the individual fractions for the presence of functional compounds preferably "on line" in a capillary at the end of a separation matrix. The coupling of fractionating methods with FCS detection is described in detail in WO 94/16313.

Often, aggregation and degradation are phenomena to be monitored. Aggregates display e.g. brightnesses and diffusion times different from the monomers. In determining both properties, the measurements become more precise.

In sequencing according to the method of Sanger, oligomers of different length, of which the terminating nucleic acid is labelled with a dye, are identified. Advanced techniques, as e.g. the one described in DE 38 07 975 A1, use dyes which exhibit different properties, such as fluorescence lifetime, according to the type of base they are attached to. The determination of a base is much more secure if several properties, such as fluorescence lifetime and brightness, or any other specific physical property, are determined according to the invention and cross checked for consistency. In a preferred embodiment, the sample to be sequenced is separated by gel or capillary electrophoresis, or a separation step is conducted by capillary electrochromatography, electrohydrodynamic migration or related electrokinetic methods.

In one embodiment, said distribution of the length of time intervals is fitted using a priori information on said sample. In a further embodiment, said distribution of the length of time intervals is processed by applying an inverse transformation with linear regularization (ITR) or inverse transformation with constraints (ITC) or inverse transformation with regularization and constraints (ITRC). Inverse transformation can be used to determine which composition of the sample would yield the theoretical values of the distribution of the length of time intervals closest to the experimental data. Because of statistical errors and limited sizes of measured data, inverse transformation is often an ill-posed mathematical problem, characterized by wild oscillations in its outcome. ITR, ITC and ITCR stabilize the mathematical problem by looking for a "regular" (e.g. a smooth) or constrained solution, for example by minimizing the sum of squared deviations of statistical data and a function of the solution itself, penalizing "irregular", usually irreproducible structures in the outcome, or values having no physical meaning. An example of constraining is disallowing negative values for concentrations (For the method of ITR, see, e.g., W. H. Press, S. A. Teukolsky, W. T. Vetterling, B. P. Flannery, Numerical recipes in C: the art of scientific computing, second edition, Cambridge University Press, 1992, p. 808).

In fluorescence studies, it may be advantageous to take measures for reducing the background count rate, arising from Raman scattering in the solute material and dark count rate of the detector, with respect to the count rate per unit. In particular, it is in some cases preferred to use measurement volumes smaller than 10⁻¹² l, more preferably smaller than 10⁻¹⁴ l.

The measurement volumes can preferably be arranged on twodimensional carriers, such as membranes or sheets having wells. Suitable carrier systems are e.g. described in WO 94/16313. In a further preferred embodiment, said measurement volumes can be arranged in a linear way, as e.g. in a capillary.

Advantageously, the high signal to background count rate and the small optical measurement volume may be achieved by using at least one microscope objective, preferably with a numerical aperture ≥ 0.9, in a confocal manner for both focussing the incident laser beam and collecting radiation emitted, scattered and/or reflected by units in said sample. A suitable device is disclosed in WO 94/16313.

In a further preferred embodiment, the measurement volume iS restricted by the use of elements of near field optical microscopy. Near field optical microscopy means here that the radiation, in particular light, passes through an aperture with at least one of its dimensions being smaller than the wavelength of the light used and which is in direct contact to the measurement volume. The aperture may consist of an opaque layer with at least one hole of said diameter or at least one slit of appropriate width and/or a tapered glass fiber or wave guide with a tip diameter of said width, optionally coated with an opaque layer outside. Near field optical microscopy can be used for focussing the excitation light of the units, and/or collecting the light emitted by the units. A suitable device is disclosed in WO 96/13744.

Another preferred embodiment combines near field optical microscopy for the excitation light path, and conventional optical microscopy for the emission light path, or vice versa. The present invention profits from such a realization in the sense that the size of the measurement volume is reduced compared to conventional confocal microscopy. Thus, the present invention can be used to measure higher concentration of particles as with other optical schemes.

In a preferred embodiment of the method, multiple photon excitation is used to excite a unit. Multiple photo excitation means that the sum, difference or any other combination of wave frequencies of two, three or more photons is used for excitation of e.g. luminescence. Such an excitation scheme has an advantage in the sense that the excitation probability is not linearly dependent on excitation intensity, but on the second or higher power. Thus, the multiple photon excitation is mostly limited to the volume of the laser focus, whereas outside the laser focus no spurious excitation is generated. The present invention profits from such an excitation scheme in the sense that less background is generated compared to single photon excitation, and that there is no pinhole necessary to restrict the measurement volume. Appropriate laser sources of picosecond or sub-picosecond pulses are well known to those of skill in the art.

## Claims

**1.** A method for characterizing samples having units, by monitoring fluctuating intensities of radiation emitted, scattered and/or reflected by said units in at least one measurement volume, the monitoring being performed by at least one detection means, said method comprising the steps of:
a) measuring in a repetitive mode a length of time intervals between photon counts,
b) determining a function of the length of said time intervals,
c) determining a function of at least one specific physical property of said units on basis of said function of the length of time intervals.

**2.** The method according to claim 1, wherein said length of time intervals is measured between consecutive photon counts.

**3.** The method according to claim 1 and/or 2, wherein said function of at least one specific physical property of said units and/or said function of the length of said time intervals is a distribution function.

**4.** The method according to at least one of the claims 1 to 3, wherein said units are particles, molecules, aggregates, vesicles, cells, viruses, bacteria, beads, centers, or mixtures thereof in solids, liquids or gases.

**5.** The method according to at least one of the claims 1 to 4, wherein said units can be grouped into species which can be distinguished by at least one of their specific physical properties.

**6.** The method according to at least one of the claims 1 to 5, wherein at least one species is luminescent, preferably fluorescent, and/or is luminescently labelled.

**7.** The method according to at least one of the claims 1 to 6, wherein the specific physical property characterizing said units is specific brightness.

**8.** The method according to at least one of the claims 1 to 7, wherein the specific physical property characterizing fluorescent units is the polarization ratio of their fluorescence, or fluorescence anisotropy, or any other property expressing the extent of polarization of fluorescence.

**9.** The method according to at least one of the claims 1 to 8, wherein the specific physical property characterizing fluorescent units is the ratio of fluorescence intensities corresponding to different excitation wavelengths and/or different spectral sensitivities of fluorescence detection, or any other property expressing the dependence of fluorescence intensity on the wavelength of excitation and/or detection.

**10.** The method according to at least one of the claims 1 to 9, wherein the specific physical property characterizing fluorescent units is lifetime of fluorescence.

**11.** The method according to at least one of the claims 1 to 10, wherein the specific physical property characterizing said units is the diffusion coefficient, or correlation time of radiation intensity fluctuations, or any other property directly related to said diffusion coefficient.

**12.** The method according to at least one of the claims 1 to 11, wherein the luminescence properties of the units are varied by conjugating them with a first molecule, in particular biotin, which binds a luminescently labelled second molecule, in particular luminescently labelled avidin or streptavidin.

**13.** The method according to at least one of the claims 1 to 12, wherein the luminescence properties of a unit are changed by energy transfer, in which energy absorbed by said unit is transferred upon close contact to a luminophore of an acceptor and subsequently emitted.

**14.** The method according to at least one of the claims 1 to 13, wherein said units each carry a number of binding sites for luminescent units.

**15.** The method according to at least one of the claims 1 to 14, wherein the measurement volume is only a part of the total volume of said sample and has a volume ≤ 10 ⁻¹² l, preferably ≤ 10⁻¹⁴ l.

**16.** The method according to at least one of the claims 1 to 15, wherein said units are diffusing and/or being actively transported into and out of said measurement volume and/or said sample is actively transported and/or optically scanned.

**17.** The method according to at least one of the claims 1 to 16, wherein the measurement volumes are arranged on a two-dimensional carrier, in particular on a membrane or in sheets having wells, or in linear way, preferably in a capillary system.

**18.** The method according to at least one of the claims 1 to 17, wherein a confocal microscope set-up is used, comprising at least one microscope objective, preferably with a numerical aperture ≥ 0.9, for both focussing an incident laser beam and collecting radiation emitted, scattered and/or reflected by said units of said sample, a dichroic mirror, a pin-hole in the image plane of said microscope objective, a detection means, a data acquisition means, and optionally means for scanning and/or actively transporting said sample.

**19.** The method according to at least one of the claims 1 to 18, wherein said measurement volume is restricted by the use of elements of near field optical microscopy, or their combination with conventional microscopy.

**20.** The method according to at least one of the claims 1 to 19, wherein fluorescence is induced using multiple photon excitation.

**22.** The method according to at least one of the claims 1 to 21, wherein said distribution of the length of time intervals is fitted using a priori information on said sample.

**23.** The method according to at least one of the claims 1 to 2, wherein said distribution of the length of time intervals is processed by applying an inverse transformation with linear regularization and/or constraints.

**24.** The method according to at least one of the claims 1 to 23 for use in high throughput screening, diagnostics, monitoring polymerization, aggregation and degradation processes, particle sorting, or nucleic acid sequencing.
